# EUROPEAN PATENT SPECIFICATION

(11) **EP 2 355 578 B1**
(45) Date of publication and mention of the grant of the patent: **20.03.2013**
(21) Application number: 10152543.4
(22) Date of filing: 03.02.2010
(51) Int. Cl.: H04W 36/02

(54) **Performing a handover in a TDMA system from a first time slot to a second time slot**
Übergabe in einem TDMA-System von einem ersten Zeitschlitz zu einem zweiten Zeitschlitz
Transfert dans un système TDMA depuis un premier créneau horaire vers un deuxième créneau horaire

(43) Date of publication of application: 10.08.2011
(73) Proprietor: Dialog Semiconductor B.V., 5215 MV 's-Hertogenbosch (NL)
(72) Inventor: Lubberhuizen, Wessel Harm, 7455 ES, Enschede (NL); Helsloot, Michiel Andre, 5231 HD, 's-Hertogenbosch (NL)
(74) Representative: Ketelaars, Maarten F.J.M.

(56) References cited:
- US-A1- 2006 187 970
- US-A1- 2008 144 645
- HUNG-YUN HSIEH ET AL: "Handoff with DSP Support: Enabling Seamless Voice Communications across Heterogeneous Telephony Systems on Dual-Mode Mobile Devices" IEEE TRANSACTIONS ON MOBILE COMPUTING, IEEE SERVICE CENTER, LOS ALAMITOS, CA, US LNKD- DOI:10.1109/TMC.2008.87, vol. 8, no. 1, 1 January 2009 (2009-01-01) , pages 93-108, XP011227913 ISSN: 1536-1233

## Description

### Field of the invention

The invention relates to a method for performing a handover in a TDMA system from a first time slot to a second time slot, the method comprising:
a) receiving data portions comprising N bits in a first time slot and using these data portions to generate a first part of an output stream;
b) performing a handover from the first time slot to the second time slot,
c) receiving data portions comprising N bits in a second time slot and using these data portions to generate a second part of the output stream.

The invention further relates to a computer arrangement arranged to perform such a method.

### Background of the invention

In many communication systems, information is exchanged using data portions (also referred to as packets) comprising data. A data portion may comprise a header at the beginning of the data portion which includes information related to the identification of the data portion, a payload in the middle of the data portion, which includes the information that is actually to be transferred, a trailer at the end of the data portion which is to detect a possible transmission error in the data portion.
In communication systems the data portions are usually transferred between a transmitter and a receiver. The transmitter may for instance be a base station of a DECT cordless telephone system. The receiver may for instance be a handset of a DECT cordless telephone system. Of course, the roles of transmitter and receiver may change during communication.
As in the communication system more than one transmitter and/or more than one receiver may be present, while only a single communication channel is available, Time Division Multiple Access techniques (TDMA-techniques) may be used, as will be known by a person skilled in the art. Such a TDMA system defines frames which are divided in a number of time slots. Each time slot comprises a data portion. Different time slots are allocated to different pairs of transmitter and receiver.
When transmitting voice data (e.g. in a DECT-system) the loss of a data portion may be concealed using a packet loss concealment method (PLC) which generates a concealment packet to conceal the lost data portion.
PLC may comprise the following concealment techniques for generating a concealment packet to replace the lost data portion:
- Silence (muting) substitution: generating a concealment packet with a period of silence.
- Packet repetition: generating a concealment packet by duplicating a data portion immediately preceding the lost data portion.
- Pitch estimation: generating a concealment packet by determining a fundamental frequency of the data (e.g. voice) encoded in data portions preceding the lost data portion and using said fundamental frequency to generate a substitute packet to fill the concealment packet.
- Linear prediction: generating a concealment packet by determining waveform parameters from data portions preceding a segment waveform encoded in the lost data portion. The concealment packet is synthesized responsive to the predicted parameters via linear interpolation techniques.

When transmitting voice data (e.g. in a DECT-system) transmission errors may cause the transmitted data to be degraded. A distinction can be made between bit errors and packet errors. In the first case only a few bits in the frame are corrupted. In the second case the entire packet is lost, for instance because the packet arrives too late (e.g. in large networks), because synchronization between transmitter and receiver is lost, or because the signal is severely degraded due to noise or interference.

For wireless communication links the most common reasons for packet errors are:
- Low signal strength due to a large distance between transmitter and receiver
- Low signal strength due to reflections by objects (multipath fading)
- Interference from other transmitters using the same frequency band and time slot.

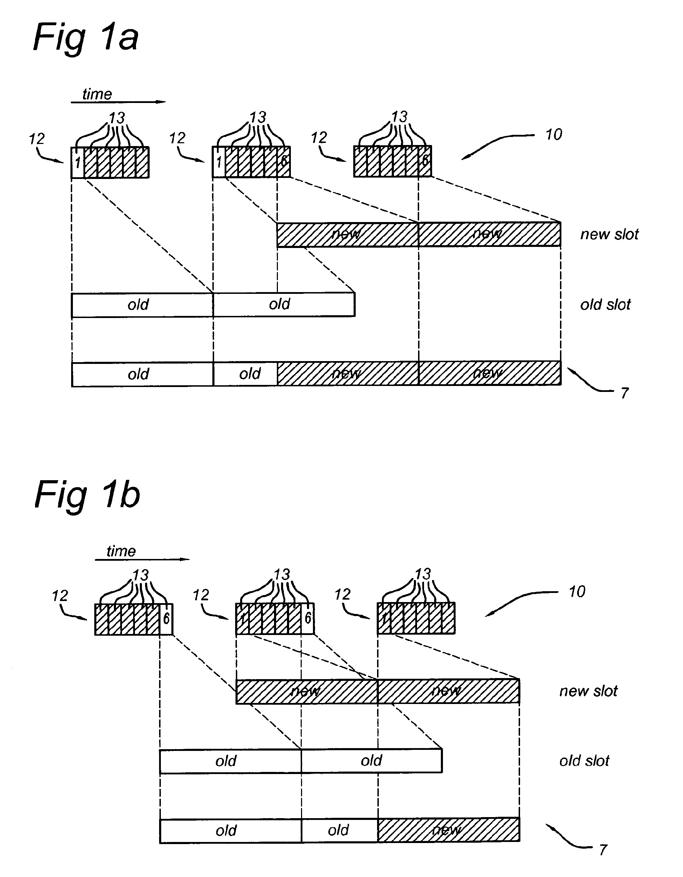

In order to combat packet errors (to avoid producing concealment packets), DECT provides a handover mechanism. When a first (wireless) communication link between a transmitter (e.g. a fixed part like a base station) and a receiver (e.g. a portable part like a handset) is degraded above a certain threshold, a secondary (wireless) communication link is made between the transmitter and the receiver.
The secondary communication link can either be with the same transmitter (at a different slot number), or with a different transmitter.
The receiver compares the signal quality between the two alternative communication links, and initiates a handover from the primary communication link to the secondary communication link if the quality of the secondary communication link is higher.
The handover itself involves no signal degradation, even though the data portions in the primary and secondary communication links may not be aligned, (i.e. the primary and secondary communication links may have a different timing). For instance, for the same frame used during the handover, the data portion of the time slot used in the primary communication link may be associated with the data portion of a different time slot in the secondary communication link in order to generate a handover packet to avoid overlap (i.e. the data portion of the time slot used in the primary communication link is not part of the data portion of said different time slot used in the secondary communication link).
A typical handover scenario for a TDMA system is shown in Figure 1a. Fig. 1a shows a (n input) data stream 10 as may be received by a receiver, comprising a plurality of frames 12. Each frame 12 comprises a plurality of time slots 13 (in this example, 6 time slots in one frame and 3 frames in the input data stream), each time slot 13 being associated with a corresponding data portion.
Fig. 1a also shows an output stream 7 as may be generated by the receiver.
The input stream 10 may be received from a base station in a DECT telephone system, where each frame 12 comprises time slots 13 associated with different telephone conversations. The receiver may select the time slot 13 from a predetermined frame 12 to generate the output stream 7, which may for instance be a sound signal to be played via a speaker comprised by the receiver.
In case a handover situation occurs, the receiver may decide to perform a so-called handover, it is to use a different time slot via which the same data portions are being communicated.
According to an example, before the handover, the receiver uses the first time slot 1 of a frame, wherein number 1 is the old time slot identification number. After the handover, the receiver uses time slot 6, wherein number 6 is the new slot identification number. As a result of the timing difference between the old slot and the new slot, there is a difference in timing alignment for the decoded data from time slot 1 and time slot 6 (indicated by the dashed lines). This causes an irregularity in the output stream 7.
A comparable situation arises when the new slot is earlier than the old slot, i.e. the old slot identification number is bigger (e.g. 6) than the new slot identification number (e.g. 1), as is shown in Figure 1b. Again, an irregularity is present in the output stream 7.
Note that the period in which data is received from multiple slots may span more than one frame. However, it is assumed that the actual handover from the old slot to the new slot occurs in a specific frame.
As can be seen in Fig. 1b, this irregularity in the output stream 7 is caused by the fact that the receiver performs the handover in an abrupt way, i.e. starts using the data portions from the new time slot as soon as these are available. This doesn't guarantee the output stream 7 with an optimal quality when the overlapping takes place between data portion in old time slot and data portion in new time slot.
Related background prior art techniques can be found in US 2008/144645, US 2006/187970 and HUNGYUN HSIEH ET AL: "Handoff with DSP Support: Enabling Scamless Voice Communications accross Heterogeneous Telephony Systems on Dual-Mode Mobile Devices", ISSN 1536-1233.
It is an object to provide embodiments in which a more sophisticated handover is provided, providing an output stream with a higher quality.

### Summary of the invention

The invention is defined in method claims 1-11, computer arrangement claims 12 and 15 and computer program product claims 13 and 14, wherein action b) comprises generating a handover packet to be part of the output stream in between the first and second part of the output stream, the handover packet comprising N + Δ bits, where Δ takes into account a timing difference between the first time slot and the second time slot.
This embodiment provides the advantage that a special handover packet is generated, which has a special length, adapted to the timing difference between the first time slot and the second time slot. This allows for generating an output stream with a higher quality.

### Brief description of the drawings

The invention will be explained in detail with reference to some drawings that are only intended to show embodiments of the invention and not to limit the scope. The scope of the invention is defined in the annexed claims and by its technical equivalents. The drawings show:
Figures 1a and 1b schematically depict a handover according to the prior art,
Figures 2a, 2b and 2c schematically depict handover according to an embodiment,
Figure 3 is a schematic flow chart of an embodiment,
Figure 4 is a schematic flow chart of an embodiment,
Figure 5 is a schematic flow chart of a further embodiment,
Figure 6 is a schematic flow chart of a further embodiment,
Figure 7 shows general setup of a computer arrangement suitable to perform the method of the invention.

### Detailed description of embodiments

According to the embodiment provided a handover packet is generated the length of which depends on the timing difference between the first and the second time slot. Furthermore, a plurality of flexible and controllable embodiments are provided for determining and allocating the length of such a handover packet during handover and embodiments are provided for filling the handover packets with data.
The methods may generate quality parameters for both a first and a second time slot during the handover. The methods may also comprise determining whether the generated quality parameters are above or below a predetermined quality level. Also, a concealment packet may be generated. Based on the determined quality parameters a decision can be taken about which data is to be used for filling the handover packet, i.e. data portion from the first time slot, and/or the data portion from the second time slot and/or the concealment packet.
Some possible quality parameters and any combination thereof are provided below:
- Presence of the synchronization field
- cyclic redundancy check (CRC) error in the header portion
- cyclic redundancy check (CRC) error in the payload portion
- Average signal to noise ratio
These will not be described in detail as these will be understood by a person skilled in the art. It will be understood that the concealment packet may be generated in many ways, for instance in accordance with the prior art, such as by using one or more of the following techniques: silence (muting) substitution, packet repetition, pitch estimation, linear prediction, which are described in more detail above.

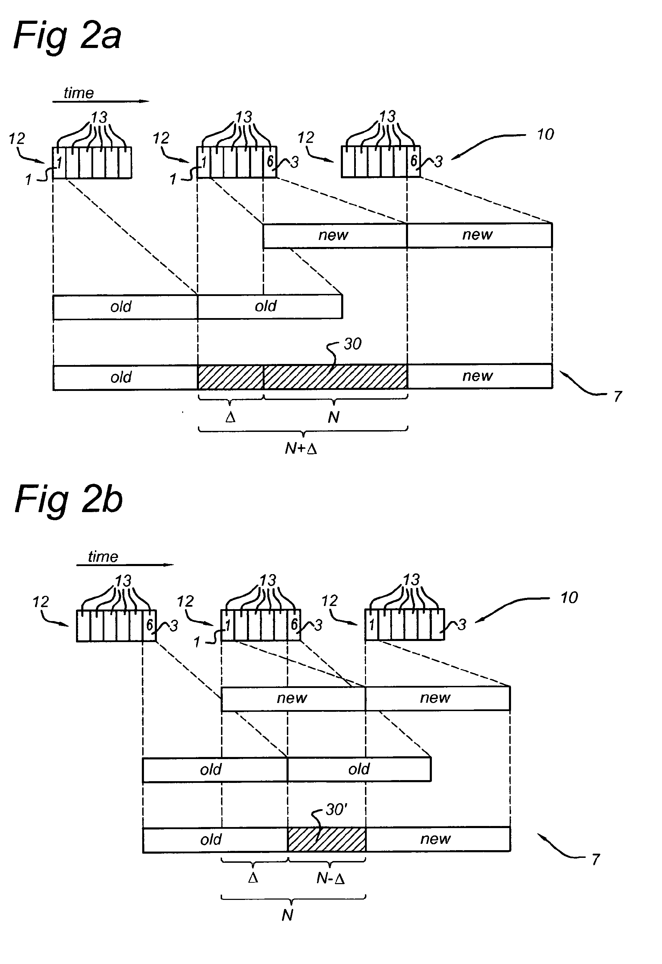

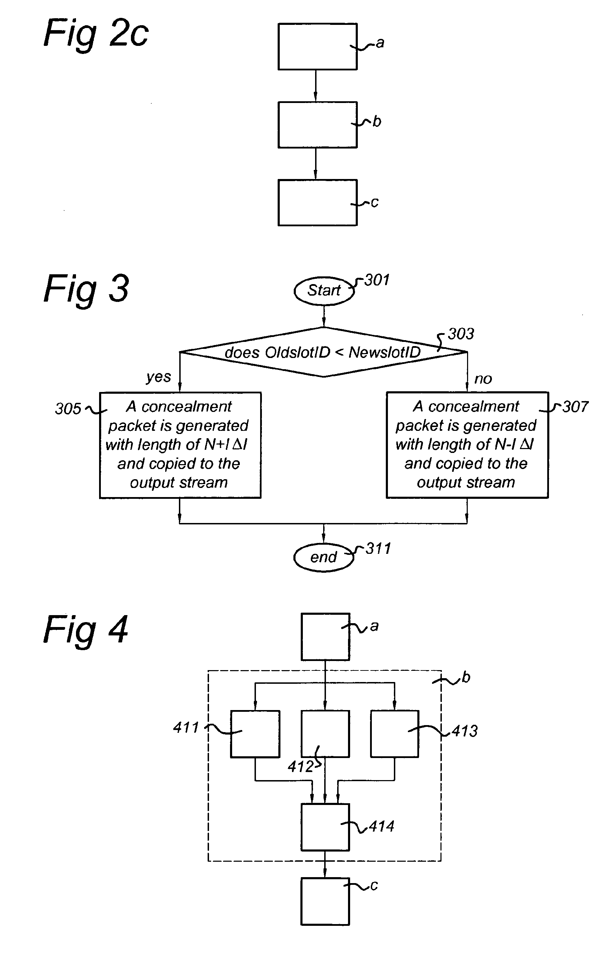

The handover packet may comprise N + Δ bits which comprises data from at least one of the first time slot, the second time slot and the concealment packet, where Δ takes into account a timing difference between the first time slot and the second time slot. Here Δ may be either a positive value or a negative value.
Thus a handover algorithm is performed, generating a handover packet, determining the length of the handover packet and determining which data is to be used for filling the handover packet.
The concealment packet may be used to fill the handover packet completely or partially depending on the situation, as will be evident from the examples described below. In some situations, the concealment packet will be generated but not used to fill the handover packet. The concealment packet may be generated before performing the handover algorithm or as part of the handover algorithm, i.e. during the handover algorithm. Also, the length of the generated concealment packet may depend on the situation, and may for instance have a length of N+Δ bits. However, if the concealment packet is generated during the handover algorithm, a smaller concealment packet may be generated as it may already be determined that not the complete handover packet needs to be filled with data from the concealment packet.
The first and second time slots are identified by a first and second identification number, and N + Δ > N in case the second identification number is greater than the first identification number, and N + Δ < N in case the second identification number is smaller than the first identification number. Each data portion from respective time slots comprises N bits.
This is schematically depicted by Fig. 2a and 2b. Fig. 2a shows an example wherein the second identification number is greater than the first identification number and thus a handover packet 30 is generated with a length greater than N. Fig. 2b shows an example wherein the first identification number is greater than the second identification number and thus a handover packet 30' is generated with a length smaller than N. Thus, the value of Δ may be positive or negative. Next, it will be explained how the value of Δ may be computed.
For DECT, the time-alignment difference can be computed from the slot numbers of the primary and the secondary connection, i.e. Δ equals (t₂ - t₁)*Tᵣₐₜₑ, wherein Tᵣₐₜₑ is the data transmission rate of output stream 7, t₂ is the time for the second time slot to release respective data portion and t₁ is the time for the first time slot to release respective data portion, said t1 and t2 are in the same frame. It is noted here that if the second time slot is positioned after the first time slot within a frame, Δ is a positive number. In case the first time slot is positioned after the second time slot within a frame, Δ is a negative number. Thus, the handover packet 30, 30' may comprise more or less bits than N depending on the situation, as schematically shown in Fig.'s 2a and 2b.
So, according to an embodiment, there is provided a method as schematically shown in Fig. 2c, for performing a handover in a TDMA system from a first time slot to a second time slot, the method comprising:
receiving data portions comprising N bits in a first time slot 1 and using these data portions to generate a first part of an output stream 7;
   a) performing a handover from the first time slot to the second time slot,
   b) receiving data portions comprising N bits in a second time slot 3 and using these data portions to generate a second part of the output stream 7,
wherein action b) comprises generating a handover packet 30, 30' to be part of the output stream 7 in between the first and second part of the output stream 7. The handover packet 30, 30' comprises N + Δ bits, wherein Δ takes into account a timing difference between the first time slot 1 and the second time slot 3.
Now the length of the handover packet 30, 30' is determined, the content of the handover packet 30, 30' may be determined. Different handover algorithms may be used to perform this as part of action b) of which a few examples are provided below.

### Simple handover algorithm

A first possible way to fill the handover packet 30, 30', and thus a way to perform action b, is depicted in Fig. 3.
In general, this embodiment fills the handover packet with data from the concealment packet. By considering N + Δ > N in case the second identification number is greater than the first identification number, and N + Δ < N in case the second identification number is smaller than the first identification number, the handover packet is filled with data from said concealment packet. This will be described in more detail below with reference to Fig. 3.
In action 301, the handover algorithm starts.
In action 303, the handover algorithm checks whether the old slot identification number is smaller than the new slot identification number.
If yes, a concealment packet with length of N+|Δ| is generated and is copied to the handover packet in action 305.
If no, and the old slot identification number is thus bigger than the new slot identification number, a concealment packet with length of N-|Δ| is generated and is copied to the handover packet in action 307.
After actions 307 and 305, the handover algorithm ends in action 311.
The concealment packet may be generated by any suitable technique, examples of which are provided above.
The advantage of this embodiment is that it provides relatively low complexity. Of course, slight variations are possible that yield similar results.

### Further handover algorithms

However, more sophisticated handover algorithms may be conceived. For instance, the handover algorithm may perform a quality check of the data from the first and/or second time slot and determine to use this data portion or not to fill the handover packet 30, 30'. An example of such an algorithm is depicted in Fig. 4.
In general, such handover algorithms comprise as part of action b) performing a handover algorithm for deciding which data to use from at least one of said first slot 1, said second slot 3 and a concealment packet to fill the handover packet with. This is schematically shown in Fig. 4.
Also, shown in Fig. 4 is how action b) may be embodied. For instance, the handover algorithm may comprise at least one of:
- determining a quality parameter of the data from the first time slot (action 411) and decide not to include the data from the first time slot in the handover packet in case the quality parameter of the data from the first slot is below a predetermined quality level (action 414), and
- determining a quality parameter of the data from the second slot (action 412) and decide not to include the data from the second slot in the handover packet in case the quality parameter of the data from the second slot is below a predetermined quality level (action 414).
Furthermore, the concealment packet may be generated in action 413. Action 414 may thus further comprise deciding which data to use from the at least one of said first slot 1, said second slot 3 and said concealment packet to fill the handover packet with.

Of course, the flow diagram in Fig. 4 provides a simplified and schematic overview, and more actions than shown may be performed, such a determining the length of the handover packet that is to be used. Also, actions 411, 412 and 413 may not necessarily be all performed depending on the circumstances. Also, although shown as simultaneous actions, actions 411, 412, 413 may be performed in any suitable order. Further examples of this are provided below.

### Balanced handover algorithm

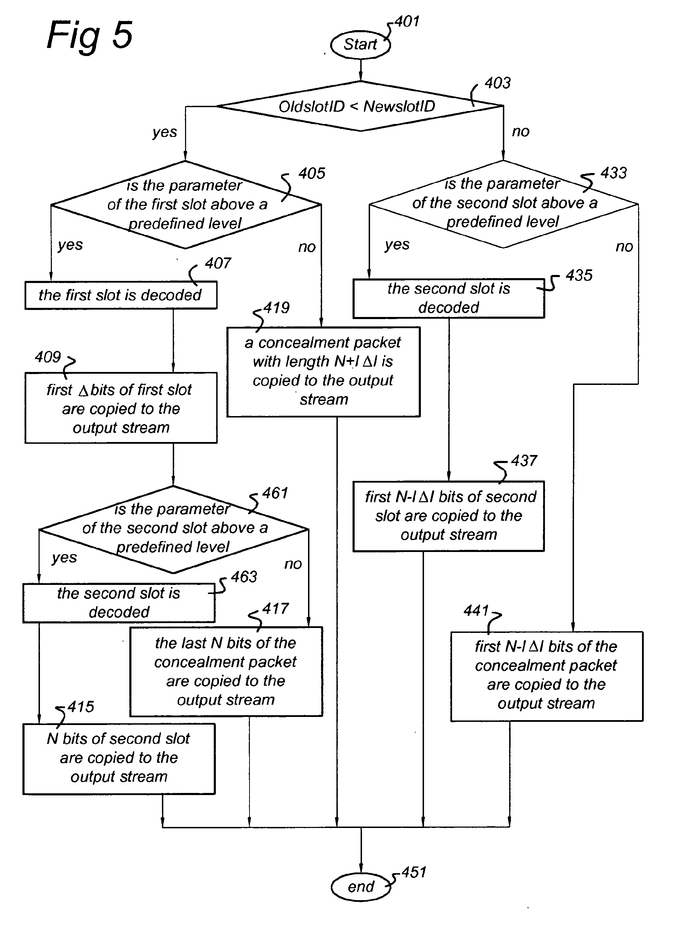

A more detailed example of a handover packet will be described with reference to Fig. 5. A balanced handover algorithm is depicted in Fig. 5:
In action 401, the handover algorithm starts. In action 403, the handover algorithm checks whether the old slot identification number is smaller than the new slot identification number.
If yes, the handover algorithm checks whether the generated quality parameter for the first slot is above a predetermined quality level, action 405. The quality parameter may be generated as part of action 405 or may already have been generated before.
If yes, the first slot is decoded in action 407. The first |Δ| bits of the decoded payload of the first slot are copied to the handover packet, action 409. Of course, instead of |Δ| bits, any other number of suitable bits may be copied to the handover packet, such as for instance N bits or any number in between |Δ| and N bits.
The first Δ bits of the decoded payload of the first slot are copied to the handover packet, although also other parts (e.g. the last length of |Δ| bits of the first slot) may be used or smaller parts of the data portion in the first packet may be used.
However, using the first length of |Δ| bits of data portion in the first slot to copy to the handover packet may be advantageous as it provides an efficient embodiment as will be explained in more detail below.
In the first place, for some packet based encodings, the entire packet of data is required to be decoded before the decoded data is accessible (it is impossible to skip a number of coded words). In that case it is good enough to only use data that is at the beginning of a packet in order to avoid decoding data that is not used at all, resulting in additional overhead and memory use. Relevant encoding techniques which are known for people skilled in the art are implemented in order to support decoding the entire packet to stop in a certain predetermined length of said entire packet.
Secondly, if an aim for maximum quality is required, then it is necessary to use as much data as possible from the data portion in the first time slot if it is acceptable, because the other packets might not be acceptable.

The handover algorithm then starts checking whether the generated parameter for the second slot is above a predetermined quality level, action 461. Again, the quality parameter may be generated as part of action 461 may already have been generated before.
If yes, the second slot is decoded in action 463. The remainder of the handover packet is filled with data from the second slot. So, in case |Δ| bits were used from the first slots, N bits of second slot are copied to the handover packet in action 415. Of course, in case a different amount of bits were copied from the first slot to the handover packet, a different number of bits are copied to the handover packet from the second slot, such that the complete handover packet is filled with data from the first and second slot.
Next, the handover algorithm ends in action 451.
If the generated quality parameter for the second slot is below a predetermined quality level, a concealment packet with length of N+|Δ| bits is generated and the last N bits of the concealment packet are copied to the handover packet in action 417. The concealment packet may be generated as part of action 417 or may have been generated beforehand. In fact, the concealment packet may have a different length, such as length N to fill the remainder of the handover packet.
Next, the handover algorithm ends in action 451.

If the generated parameter for the first slot is below a predetermined quality level as determined in action 405, a concealment packet with length of N+|Δ| bits is generated and is copied to the handover packet in action 419. The concealment packet may be generated as part of action 419 or may have been generated beforehand.
In this embodiment, the second slot is ignored. However, it will be understood that alternatives are conceivable, wherein in case the quality parameter of the first slot is not good, only a first part of the handover packet is filled with data of a concealment packet, for instance only the first |Δ| or N bits are filled with data from the concealment packet, or any suitable number of bits in between |Δ| and N.
If the old slot identification number is bigger than the new slot identification number as determined in action 403, the generation of a quality parameter for the first slot may be ignored and the no data from the first slot is included in the handover packet. Next, the handover algorithm starts checking whether the generated quality parameter for the second slot is above a predetermined quality level in action 433.
If yes, the second slot is decoded in action 435. The first length of N-|Δ| bits of second slot are copied to the handover packet in action 437. Of course, variations are conceivable, wherein not the first length of the second slot is used, but a different part of the second slot is used to fill the handover packet with, such as the last N-|Δ| bits.
Next, the handover algorithm ends in action 451.

If the generated quality parameter for the second slot is below a predetermined quality level in action 433, the handover algorithm comprises generating a concealment packet with at least a length of N-|Δ| bits and copy the first length of N-|Δ| bits of concealment packet to the output stream in action 441.

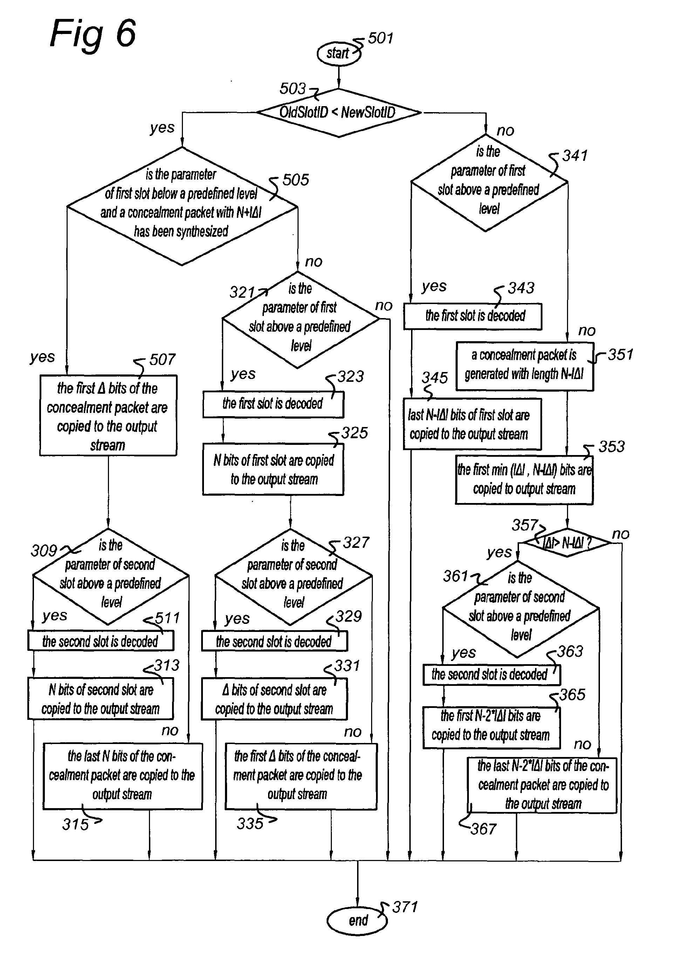

The advantage of this handover algorithm is that it has a higher quality than the algorithm described above with reference to Fig. 3, but a lower complexity than the handover algorithm described below with reference to Fig. 6.

### Optimal handover algorithm

Another detailed example of a handover packet is described with reference to Fig. 6. An optimal handover algorithm is depicted in Fig. 6:
In action 501, the optimal handover algorithm starts. In action 503, the handover algorithm checks whether the old slot identification number is smaller than the new slot identification number.
If yes, the handover algorithm checks whether the generated quality parameter for the first slot is below a predetermined quality level and whether a concealment packet has been generated with length N+|Δ|, action 505. The quality parameter may be generated as part of action 405 or may already have been generated before.
If yes, the first length of |Δ| bits of the concealment packet are copied to the handover packet, action 507. Of course, instead of |Δ| bits, any other number of suitable bits may be copied to the handover packet, such as for instance N bits or any number in between |Δ| and N bits.
The handover algorithm then starts checking whether the generated parameter for the first slot is above a predetermined quality level, action 309. Again, the quality parameter may be generated as part of action 309 may already have been generated before.
If yes, the second slot is decoded in action 511. The remainder of the handover packet is filled with data from the second slot. So, in case |Δ| bits were used from the first slot, N bits of second slot are copied to the handover packet in action 313. Of course, in case a different amount of bits were copied from the first slot to the handover packet, a different number of bits are copied to the handover packet from the second slot, such that the complete handover packet is filled with data from the first and second slot.
Next, the handover algorithm ends in action 371.
If the generated parameter for the first slot is below a predetermined quality level, the remainder of the handover packet is filled with data from the concealment packet. So, in case |Δ| bit were used from the first slot, the last N bits of concealment packet are copied to the handover packet in action 315. Of course, in case a different amount of bits were copied from the first slot to the handover packet, a different number of bits are copied to the handover packet from the concealment packet, such that the complete handover packet is filled with data from the first slot and concealment packet.
Next, the handover algorithm ends in action 371.
If the generated quality parameter for the first slot is above a predetermined quality level or a concealment packet has not been generated with length of N+|Δ| bits, the handover algorithm starts checking whether the generated quality parameter for the first slot is above a predetermined quality level in action 321. Again, the quality parameter may be generated as part of action 321 or may already have been generated before.
If no, the handover algorithm ends in action 371.
If yes, the first slot is decoded in action 323. The first N bits of the decoded payload in the first slot are copied to the handover packet in action 325. Of course, instead ofN bits, any other number of suitable bits may be copied to the handover packet, such as for instance |Δ| bits or any number in between |Δ| and N bits.
The handover algorithm starts checking whether the generated quality parameter for the second slot is above a predetermined quality level in action 327.
If yes, the second slot is decoded in action 329. The length of |Δ| bits of data portion in the second slot are copied to the handover packet in action 331. Of course, in case a different amount of bits were copied from the first slot to the handover packet, a different number of bits are copied to the handover packet from the second slot, such that the complete handover packet is filled with data from the first slot and second slot. The handover algorithm ends in action 371.
If no, the first length of |Δ| bits of the concealment packet are copied to the handover packet in action 335. Of course, in case a different amount of bits were copied from the first slot to the handover packet, a different number of bits are copied to the handover packet from the concealment packet, such that the complete handover packet is filled with data from the first slot and concealment packet. The handover algorithm ends in action 371.
If the concealment packet has not been generated with length of |Δ| bits, the handover algorithm ends in action 371. Of course, in case a different amount of bits were copied from the first slot to the handover packet, a different number of bits are checked whether such a number of bits are generated from the concealment packet, such that the complete handover packet can be filled with data from the first slot and concealment packet.
If the old slot identification number is greater than the new slot identification number, the handover algorithm starts checking whether the generated quality parameter for the first slot is above a predetermined quality level in action 341. Again, the quality parameter may be generated as part of action 341 or may already have been generated before.
If yes, the first slot is decoded in action 343. The last length of N-|Δ| bits of first slot are copied to the handover packet in action 345.
In this embodiment, the second slot is ignored. However, it will be understood that alternatives are conceivable, wherein in case the quality parameter of the first slot is not good, only a first part of the handover packet is filled with data of a concealment packet, for instance only the first |Δ| or N-|Δ| bits are filled with data from the concealment packet, or any suitable number of bits in between |Δ| and N-|Δ|.
Next, the handover algorithm ends in action 371.
If the generated quality parameter for the first slot is below a predetermined quality level, a concealment packet is generated with length of N-|Δ| bits in action 351.
The first length of min(|Δ|, N-|Δ|) bits are copied to the handover packet in action 353. Of course, instead of min(|Δ|, N-|Δ|) bits, any other number of suitable bits may be copied to the handover packet, such as for instance any number in between |Δ| and N-|Δ| bits.

The handover algorithm starts checking whether |Δ| is greater than N-|Δ| in action 357.
If yes, in this embodiment, the second slot is ignored. However, it will be understood that alternatives are conceivable, wherein in case the quality parameter of the first slot is not good, only a first part of the handover packet is filled with data of a concealment packet, for instance only the first min(|Δ|, N-|Δ|) or N-|Δ| bits are filled with data from the concealment packet, or any suitable number of bits in between min(|Δ|, N-|Δ|) and N-|Δ|.
Next, the handover algorithm ends in action 371.
If no, the handover packet starts checking whether the generated quality parameter for the second slot is above a predetermined quality level in action 361. Again, the quality parameter may be generated as part of action 361 or may already have been generated before.
If yes, the second slot is decoded in action 363. The first length ofN-2*|Δ| bits are copied to the handover packet in action 365. Of course, in case a different amount of bits were copied from the first slot to the handover packet, a different number of bits are copied to the handover packet from the second slot, such that the complete handover packet is filled with data from the first and second slot.
Next, the handover algorithm ends in action 371.
If the generated quality parameter for the second slot is below a predetermined quality level, the last length of N-2*|Δ| bits of the concealment packet are copied to the handover packet. Of course, in case a different amount of bits were copied from the first slot to the handover packet, a different number of bits are copied to the handover packet from the concealment packet, such that the complete handover packet is filled with data from the first slot and concealment packet.
Next, the handover algorithm ends in action 371.
The advantage of this handover algorithm is that it provides optimal quality, in the sense that the portion of generated data is minimized than the algorithms described above with reference to Fig. 3 and Fig. 6, but a higher complexity than the other two handover algorithms described above.
The methods of invention are not limited by those three examples listed above.

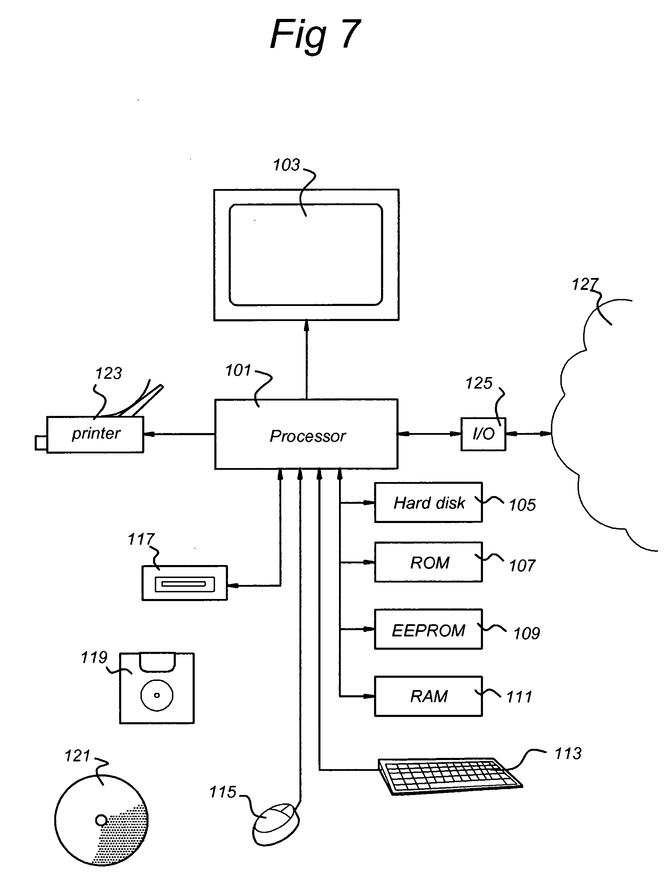

In figure 7, an overview is given of a computer arrangement that can be used to carry out the method according to the invention. The computer arrangement may be comprised by a receiver executing one of the embodiments, such as a handheld DECT telephone, etc. Said arrangement comprises a processor 101 for carrying out arithmetic operations.
The processor 101 is connected to a plurality of memory components, including a hard disk 105, Read Only Memory (ROM) 107, Electrically Erasable Programmable Read Only Memory (EEPROM) 109, and Random Access Memory (RAM) 111. Not all of these memory types need necessarily be provided. Moreover, these memory components need not be located physically close to the processor 101 but may be located remote from the processor 101.
The processor 101 is also connected to units for inputting instructions, data etc. by a user, like a keyboard 113, and a mouse 115. Other input units, such as a touch screen, a track ball and/or a voice converter, known to persons skilled in the art may be provided too.
A reading unit 117 connected to the processor 101 is provided. The reading unit 117 is arranged to read data from and possibly write data on a data carrier like a floppy disk 119 or a CDROM 121. Other data carriers may be tapes, DVD, Blu Ray disks, memory sticks, etc. as is known to persons skilled in the art. The data carrier may be provided with a computer program product comprising instructions and data arranged to be read by the processor 101 and, after being read, allowing the processor 101 to perform a method in accordance with the embodiments. Such a computer program product may then be loaded in one of the memory components 105, 107, 109, 111. However, such computer program product may, alternatively, be downloaded via a telecommunication network 127.
The processor 101 may be connected to a printer 123 for printing output data on paper, as well as to a display 103, for instance, a monitor or LCD (Liquid Crystal Display) screen, a plasma display panel, or any other type of display known to persons skilled in the art.
The processor 101 may be connected to a communication network 127, for instance, the Public Switched Telephone Network (PSTN), a Local Area Network (LAN), a Wide Area Network (WAN), the Internet, or a DECT network, etc. by means of an I/O unit 125. The processor 101 may be arranged to communicate with other communication arrangements through the network 127.
The processor 101 may be implemented as stand alone system, or as a plurality of parallel operating processors each arranged to carry out subtasks of a larger computer program, or as one or more main processors with several sub-processors. Parts of the functionality may even be carried out by remote processors communicating with processor 101 through the network 127.
This is only intended to show how an implementation of the embodiments may work. The skilled reader will understand that many other implementations can be made without departing from the scope of the present invention.

## Claims

1. A method for performing a handover in a TDMA system from a first time slot to a second time slot, the method comprising:
a) receiving data portions comprising N bits in a first time slot (1) and using these data portions to generate a first part of an output stream (7);
b) performing a handover from the first time slot to the second time slot,
c) receiving data portions comprising N bits in a second time slot (3) and using these data portions to generate a second part of the output stream (7),
wherein action b) comprising generating a handover packet (30, 30') to be part of the output stream (7) in between the first and second part of the output stream (7), the handover packet comprising N + Δ bits, where Δ takes into account a timing difference between the first time slot (1) and the second time slot (3).

2. Method according to claim 1, wherein the first and second time slots are identified by a first and second identification number, and N + Δ > N in case the second identification number is greater than the first identification number, and N + Δ < N in case the second identification number is smaller than the first identification number.

3. Method according to claim 1, wherein the data portions are received in frames, each frame comprising a plurality of time slots, among which the first and second time slot, and wherein Δ equals (t₂ - t₁)*T_{rate,} wherein Tᵣₐₜₑ is the data transmission rate of output stream, t₂ is the time for the second time slot (3) to release respective data portion and t₁ is the time for the first time slot (1) to release respective data portion, said t₁ and t₂ are in the same frame.

4. Method according to any one of the preceding claims, wherein said handover packet (30, 30') is filled with data from at least one of said first slot (1), said second slot (3) and a concealment packet (9).

5. Method according to claim 4, wherein the method comprises generating the concealment packet comprising N+Δ bits.

6. Method according to any one of the claims 4 - 5, wherein b) comprises performing a handover algorithm for deciding which data to use from the at least one of said first slot (1), said second slot (3) and the concealment packet (9) to fill the handover packet with.

7. Method according to any one of the claims 1 - 6, wherein the handover algorithm comprises filling the handover packet with data from said concealment packet (9).

8. Method according to claim 6, wherein the handover algorithm comprises at least one of:
- determining a quality parameter of data from the first time slot and decide not to include the data from the first time slot in the handover packet in case the quality parameter of the data from the first slot is below a predetermined quality level, and
- determining a quality parameter of data from the second slot and decide not to include the data from the second slot in the handover packet in case the quality parameter of the data from the second slot is below a predetermined quality level.

9. Method according to any one of the claims 4 - 6, wherein the handover algorithm comprises:
- in case N+Δ > N, determining a quality parameter of data from the first slot, and
○ if the quality parameter of the data from the first slot is below a predetermined quality level, filling a first part of the handover packet with data from the concealment packet;
○ if the quality parameter of the data from the first slot is above a predetermined quality level, filling a first part of the handover packet with the length of Δ bits from the first slot, then determining a quality parameter of data from the second slot, and
■ if the quality parameter of the data from the second slot is below a predetermined quality level, using the concealment packet to fill a second part of handover packet,
■ if the quality parameter of the data from the second slot is ■ above a predetermined quality level, use the data from the ■ second slot to fill the second part of handover packet.
- in case N+A < N, determining a quality parameter of data from the second slot, and
○ if the quality parameter of the data from the second slot is above a predetermined quality level, using the length of N-Δ bits from the second slot to fill the handover packet,
○ if the quality parameter of the data from the second slot is below a predetermined quality level, using the concealment packet to fill the handover packet.

10. Method according to any one of the claims 4 - 6, wherein the handover algorithm comprises in case N+Δ > N,
- determining a quality parameter of data from the first slot,
- if the quality parameter of the data from the first slot is below a predetermined quality level,
○ filling a first part of the handover packet with the first length of Δ bits from the concealment packet,
○ determining a quality parameter of data from the second slot, and
■ if the quality parameter of the data from the second slot is above a predetermined quality level, filling a second part of the handover packet with length ofN bits from the second slot,
■ if the quality parameter of the data from the second slot is below a predetermined quality level, filling a second part of the handover packet with the length of N bits from the concealment packet.
- if the quality parameter of data from the first slot is above a predetermined quality level,
○ filling a first part of the handover packet with the length ofN bits from the first slot,
○ determining a quality parameter of data from the second slot, and
■ if the quality parameter of the data from the second slot is above a predetermined quality level, filling a second part of the handover packet with the length of Δ bits from the second slot,
■ if the quality parameter of the data from the second slot is below a predetermined quality level, filling a second part of the handover packet with the length of Δ bits from the concealment packet.

11. Method according to any one of the claims 4 - 6 or 10, wherein the handover algorithm comprises in case N+Δ < N,
- determining a quality parameter of data from the first slot,
- if the quality parameter of the data from the first slot is below a predetermined quality level,
○ filling a first part of the handover packet with the length of min (|Δ|, N-|Δ|) bits from the concealment packet,
○ if |Δ| > N- |Δ|, determining a quality parameter of the data from the second slot, and
■ if the quality parameter of the data from the second slot is above a predetermined quality level, filling a second part of the handover packet with the length of N - 2*Δ bits from the second slot,
■ if the quality parameter of the data from the second slot is below a predetermined quality level, filling a second part of the handover packet with the length ofN - 2*Δ bits from the concealment packet.
- if the quality parameter of the data from the first slot is above a predetermined quality level,
○ filling a first part of the handover packet with length of N - Δ bits from the first slot.

12. Computer arrangement comprising a processor (101), that is arranged to communicate with a I/O unit (125), the computer arrangement being arranged to function in a TDMA system and perform a handover in a TDMA system from a first time slot to a second time slot comprising
a) receiving data portions comprising N bits in a first time slot (1) with the I/O unit (125) and using these data portions to generate a first part of an output stream (7);
b) performing a handover from the first time slot to the second time slot,
c) receiving data portions comprising N bits in a second time slot (3) with the I/O unit (125) and using these data portions to generate a second part of the output stream (7),
wherein action b) comprising generating a handover packet (30, 30') to be part of the output stream (7) in between the first and second part of the output stream (7), the handover packet comprising N + Δ bits, where Δ takes into account a timing difference between the first time slot (1) and the second time slot (3).

13. Computer program product comprising data and instructions that can be loaded by a computer system, allowing said computer system to perform any one of the methods according to claims 1 - 1 1.

14. Computer readable medium provided with a computer program product according to claim 13.

15. Computer arrangement arranged to perform any one of the methods according claims 1 - 11.

## Patentansprüche

1. Verfahren zum Durchführen einer Übergabe in einem TDMA-System von einem ersten Zeitschlitz zu einem zweiten Zeitschlitz, wobei das Verfahren umfasst:
a) Empfangen von N Bits umfassenden Datenteilmengen in einem ersten Zeitschlitz (1) und Verwenden dieser Datenteilmengen, um einen ersten Teil eines Ausgangsstroms (7) zu generieren;
b) Durchführen einer Übergabe vom ersten Zeitschlitz zum zweiten Zeitschlitz,
c) Empfangen von N Bits umfassenden Datenteilmengen in einem zweiten Zeitschlitz (3) und Verwenden dieser Datenteilmengen, um einen zweiten Teil des Ausgangsstroms (7) zu generieren,
wobei Maßnahme b) umfasst, ein Übergabepaket (30, 30') zu generieren, das ein Teil des Ausgangsstroms (7) zwischen dem ersten und zweiten Teil des Ausgangsstroms (7) sein soll, wobei das Übergabepaket N + Δ Bits umfasst, wobei Δ eine Zeitabstimmungsdifferenz zwischen dem ersten Zeitschlitz (1) und dem zweiten Zeitschlitz (3) berücksichtigt.

2. Verfahren nach Anspruch 1, wobei der erste und zweite Zeitschlitz durch eine erste und zweite Kennzahl gekennzeichnet sind, und N + Δ > N ist, im Falle, dass die zweite Kennzahl größer ist als die erste Kennzahl, und N + Δ < N ist, im Falle, dass die zweite Kennzahl kleiner ist als die erste Kennzahl.

3. Verfahren nach Anspruch 1, wobei die Datenteilmengen in Rahmen empfangen werden, wobei jeder Rahmen mehrere Zeitschlitze, darunter den ersten und zweiten Zeitschlitz umfasst, und wobei gleich (t₂ - t₁)*T_{Rate} ist, wobei es sich bei T_{Rate} um die Datenübertragungsrate des Ausgangsstroms, bei t₂ um die Zeit handelt, die der zweite Zeitschlitz (3) braucht, um die jeweilige Datenteilmenge abzusetzen, und bei t₁ um die Zeit handelt, die der erste Zeitschlitz (1) braucht, um die jeweilige Datenteilmenge abzusetzen, wobei sich t₁ und t₂ im selben Rahmen befinden.

4. Verfahren nach einem der vorhergehenden Ansprüche, wobei das Übergabepaket (30, 30') mit Daten aus dem ersten Schlitz (1), dem zweiten Schlitz (3) und/oder einem Verschleierungspaket (9) gefüllt ist.

5. Verfahren nach Anspruch 4, wobei das Verfahren umfasst, das Verschleierungspaket zu generieren, das N + Δ Bits umfasst.

6. Verfahren nach einem der Ansprüche 4 bis 5, wobei b) umfasst, einen Übergabealgorithmus ablaufen zu lassen, um zu entscheiden, welche Daten aus dem ersten Schlitz (1), dem zweiten Schlitz (3) und/oder dem Verschleierungspaket (9) verwendet werden sollen, um das Übergabepaket damit zu füllen.

7. Verfahren nach einem der Ansprüche 1 bis 6, wobei der Übergabealgorithmus umfasst, das Übergabepaket mit Daten aus dem Verschleierungspaket (9) zu füllen.

8. Verfahren nach Anspruch 6, wobei der Übergabealgorithmus umfasst:
- Bestimmen eines Qualitätsparameters von Daten aus dem ersten Zeitschlitz, und Entscheiden, die Daten aus dem ersten Zeitschlitz nicht in das Übergabepaket mitaufzunehmen, im Falle, dass der Qualitätsparameter der Daten aus dem ersten Schlitz unter einem vorbestimmten Qualitätsniveau liegt, und/oder
- Bestimmen eines Qualitätsparameters von Daten aus dem zweiten Schlitz, und Entscheiden, die Daten aus dem zweiten Schlitz nicht in das Übergabepaket mitaufzunehmen, im Falle, dass der Qualitätsparameter der Daten aus dem zweiten Zeitschlitz unter einem vorbestimmten Qualitätsniveau liegt.

9. Verfahren nach einem der Ansprüche 4 bis 6, wobei der Übergabealgorithmus umfasst:
- im Falle, dass N + Δ > N ist, Bestimmen eines Qualitätsparameters von Daten aus dem ersten Schlitz, und
○ wenn der Qualitätsparameter der Daten aus dem ersten Schlitz unter einem vorbestimmten Qualitätsniveau liegt, Füllen eines ersten Teils des Übergabepakets mit Daten aus dem Verschleierungspaket;
○ wenn der Qualitätsparameter der Daten aus dem ersten Schlitz über einem vorbestimmten Qualitätsniveau liegt, Füllen eines ersten Teils des Übergabepakets mit einer Länge von Δ Bits aus dem ersten Schlitz, dann Bestimmen eines Qualitätsparameters von Daten aus dem zweiten Schlitz, und
■ wenn der Qualitätsparameter der Daten aus dem zweiten Schlitz unter einem vorbestimmten Qualitätsniveau liegt, Verwenden des Verschleierungspakets, um einen zweiten Teil des Übergabepakets zu füllen,
■ wenn der Qualitätsparameter der Daten aus dem zweiten Schlitz über einem vorbestimmten Qualitätsniveau liegt, Verwenden der Daten aus dem zweiten Schlitz, um den zweiten Teil des Übergabepakets zu füllen.
- im Falle, dass N + Δ < N ist, Bestimmen eines Qualitätsparameters von Daten aus dem zweiten Schlitz, und
○ wenn der Qualitätsparameter der Daten aus dem zweiten Schlitz über einem vorbestimmten Qualitätsniveau liegt, Verwenden der Länge von N - Δ Bits aus dem zweiten Schlitz, um das Übergabepaket zu füllen,
○ wenn der Qualitätsparameter der Daten aus dem zweiten Schlitz unter einem vorbestimmten Qualitätsniveau liegt, Verwenden des Verschleierungspakets, um das Übergabepaket zu füllen.

10. Verfahren nach einem der Ansprüche 4 bis 6, wobei der Übergabealgorithmus im Falle von N + Δ > N umfasst,
- Bestimmen eines Qualitätsparameters von Daten aus dem ersten Schlitz,
- wenn der Qualitätsparameter der Daten aus dem ersten Schlitz unter einem vorbestimmten Qualitätsniveau liegt,
○ Füllen eines ersten Teils des Übergabepakets mit der ersten Länge von Δ Bits aus dem Verschleierungspaket,
○ Bestimmen eines Qualitätsparameters von Daten aus dem zweiten Schlitz, und
■ wenn der Qualitätsparameter der Daten aus dem zweiten Schlitz über einem vorbestimmten Qualitätsniveau liegt, Füllen eines zweiten Teils des Übergabepakets mit einer Länge von N Bits aus dem zweiten Schlitz,
■ wenn der Qualitätsparameter der Daten aus dem zweiten Schlitz unter einem vorbestimmten Qualitätsniveau liegt, Füllen eines zweiten Teils des Übergabepakets mit der Länge von N Bits aus dem Verschleierungspaket,
- wenn der Qualitätsparameter von Daten aus dem ersten Schlitz über einem vorbestimmten Qualitätsniveau liegt,
○ Füllen eines ersten Teils des Übergabepakets mit der Länge von N Bits aus dem ersten Schlitz,
○ Bestimmen eines Qualitätsparameters von Daten aus dem zweiten Schlitz, und
■ wenn der Qualitätsparameter der Daten aus dem zweiten Schlitz über einem vorbestimmten Qualitätsniveau liegt, Füllen eines zweiten Teils des Übergabepakets mit der Länge von Δ Bits aus dem zweiten Schlitz,
■ wenn der Qualitätsparameter der Daten aus dem zweiten Schlitz unter einem vorbestimmten Qualitätsniveau liegt, Füllen eines zweiten Teils des Übergabepakets mit der Länge von Δ Bits aus dem Verschleierungspaket.

11. Verfahren nach einem der Ansprüche 4 bis 6 oder 10, wobei der Übergabealgorithmus im Falle von N + Δ < N umfasst,
- Bestimmen eines Qualitätsparameters von Daten aus dem ersten Schlitz,
- wenn der Qualitätsparameter der Daten aus dem ersten Schlitz unter einem vorbestimmten Qualitätsniveau liegt,
○ Füllen eines ersten Teils des Übergabepakets mit der Länge von min(|Δ|, N - |Δ|) Bits aus dem Verschleierungspaket,
○ wenn |Δ| > N - |Δ| ist, Bestimmen eines Qualitätsparameters der Daten aus dem zweiten Schlitz, und
■ wenn der Qualitätsparameter der Daten aus dem zweiten Schlitz über einem vorbestimmten Qualitätsniveau liegt, Füllen eines zweiten Teils des Übergabepakets mit der Länge von N - 2*Δ Bits aus dem zweiten Schlitz,
■ wenn der Qualitätsparameter der Daten aus dem zweiten Schlitz unter einem vorbestimmten Qualitätsniveau liegt, Füllen eines zweiten Teils des Übergabepakets mit der Länge von N - Δ Bits aus dem Verschleierungspaket,
- wenn der Qualitätsparameter der Daten aus dem ersten Schlitz über einem vorbestimmten Qualitätsniveau liegt,
○ Füllen eines ersten Teils des Übergabepakets mit einer Länge von N - Δ Bits aus dem ersten Schlitz.

12. Computeranordnung, einen Prozessor (101) umfassend, der dazu eingerichtet ist, mit einer E/A-Einheit (125) zu kommunizieren, wobei die Computeranordnung dazu eingerichtet ist, in einem TDMA-System zu arbeiten und eine Übergabe in einem TDMA-System von einem ersten Zeitschlitz zu einem zweiten Zeitschlitz durchzuführen, Folgendes umfassend:
a) Empfangen von N Bits umfassenden Datenteilmengen in einem ersten Zeitschlitz (1) mit der E/A-Einheit (125) und Verwenden dieser Datenteilmengen, um einen ersten Teil eines Ausgangsstroms (7) zu generieren;
b) Durchführen einer Übergabe vom ersten Zeitschlitz zum zweiten Zeitschlitz,
c) Empfangen von N Bits umfassenden Datenteilmengen in einem zweiten Zeitschlitz (3) mit der E/A-Einheit (125) und Verwenden dieser Datenteilmengen, um einen zweiten Teil des Ausgangsstroms (7) zu generieren,
wobei Maßnahme b) umfasst, ein Übergabepaket (30, 30') zu generieren, das ein Teil des Ausgangsstroms (7) zwischen dem ersten und zweiten Teil des Ausgangsstroms (7) sein soll, wobei das Übergabepaket N + Δ Bits umfasst, wobei Δ eine Zeitabstimmungsdifferenz zwischen dem ersten Zeitschlitz (1) und dem zweiten Zeitschlitz (3) berücksichtigt.

13. Computerprogrammprodukt, das Daten und Befehle umfasst, die von einem Computersystem geladen werden können, wodurch es dem Computersystem ermöglicht wird, eines der Verfahren nach den Ansprüchen 1 bis 11 durchzuführen.

14. Maschinenlesbarer Datenträger, der mit einem Computerprogrammprodukt nach Anspruch 13 versehen ist.

15. Computeranordnung, die dazu eingerichtet ist, eines der Verfahren nach den Ansprüchen 1 bis 11 durchzuführen.

## Revendications

1. Procédé pour l'exécution d'un transfert, dans un système TDMA, entre un premier créneau temporel et un deuxième créneau temporel, le procédé comprenant les étapes suivantes :
a) réception de parties de données comprenant N bits dans un premier créneau temporel (1) et utilisation de ces parties de données pour générer une première partie d'un flot de sortie (7) ;
b) exécution d'un transfert du premier créneau temporel vers le deuxième créneau temporel ;
c) réception de parties de données comprenant N bits dans un deuxième créneau temporel (3) et utilisation de ces parties de données pour générer une deuxième partie du flot de sortie (7),
dans lequel l'action b) comprend la génération d'un paquet de transfert (30, 30') de telle sorte qu'il fasse partie du flot de sortie (7), entre les première et deuxième parties du flot de sortie (7), le paquet de transfert comprenant N + Δ bits, où Δ prend en compte une différence de synchronisation entre le premier créneau temporel (1) et le deuxième créneau temporel (3).

2. Procédé selon la revendication 1, dans lequel les premier et deuxième créneaux temporels sont respectivement identifiés par un premier et un deuxième numéros d'identification, et N + Δ > N dans le cas où le deuxième numéro d'identification est supérieur au premier numéro d'identification, et N + Δ < N dans le cas où le deuxième numéro d'identification est inférieur au premier numéro d'identification.

3. Procédé selon la revendication 1, dans lequel les parties de données sont reçues dans des trames, chaque trames comprenant une pluralité de créneaux temporels, parmi lesquels les premier et deuxième créneaux temporels, et dans lequel Δ est égal à (t₂ - t₁)*Tᵣₐₜₑ, où Tᵣₐₜₑ est le débit de transmission de données du flot de sortie, t₂ est le moment où le deuxième créneau temporel (3) doit libérer la partie de données respective et t₁ est le moment où le premier créneau temporel (1) doit libérer la partie de données respective, t₁ et t₂ se trouvant dans la même trame.

4. Procédé selon l'une quelconque des revendications précédentes, dans lequel ledit paquet de transfert (30, 30') est rempli de données provenant d'au moins l'un dudit premier créneau (1), dudit deuxième créneau (3) et d'un paquet de masquage (9).

5. Procédé selon la revendication 4, lequel procédé comprend la génération du paquet de masquage comprenant N + Δ bits.

6. Procédé selon l'une quelconque des revendications 4 à 5, dans lequel l'étape b) comprend l'exécution d'un algorithme de transfert pour décider de quelles données seront utilisées, parmi l'au moins un dudit premier créneau (1), dudit deuxième créneau (3) et du paquet de masquage (9), pour remplir le paquet de transfert.

7. Procédé selon l'une quelconque des revendications 1 à 6, dans lequel l'algorithme de transfert comprend le remplissage du paquet de transfert avec des données provenant dudit paquet de masquage (9).

8. Procédé selon la revendication 6, dans lequel l'algorithme de transfert comprend au moins l'une des étapes suivantes :
- détermination d'un paramètre de qualité de données du premier créneau temporel et décision de ne pas inclure les données du premier créneau temporel dans le paquet de transfert dans le cas où le paramètre de qualité des données du premier créneau temporel est inférieur à un niveau de qualité prédéterminé, et
- détermination d'un paramètre de qualité de données du deuxième créneau et décision de ne pas inclure les données du deuxième créneau dans le paquet de transfert dans le cas où le paramètre de qualité des données du deuxième créneau est inférieur à un niveau de qualité prédéterminé.

9. Procédé selon l'une quelconque des revendications 4 à 6, dans lequel l'algorithme de transfert comprend les étapes suivantes :
- dans le cas où N + Δ > N, détermination d'un paramètre de qualité de données du premier créneau, et
○ si le paramètre de qualité des données du premier créneau est inférieur à un niveau de qualité prédéterminé, remplissage d'une première partie du paquet de transfert avec des données provenant du paquet de masquage,
○ si le paramètre de qualité des données du premier créneau est supérieur à un niveau de qualité prédéterminé, remplissage d'une première partie du paquet de transfert avec la longueur de Δ bits du premier créneau, puis détermination d'un paramètre de qualité de données du deuxième créneau, et
• si le paramètre de qualité des données du deuxième créneau est inférieur à un niveau de qualité prédéterminé, utilisation du paquet de masquage pour remplir une deuxième partie du paquet de transfert,
• si le paramètre de qualité des données du deuxième créneau est supérieur à un niveau de qualité prédéterminé, utilisation des données du deuxième créneau pour remplir la deuxième partie du paquet de transfert,
- dans le cas où N + Δ < N, détermination d'un paramètre de qualité de données du deuxième créneau, et
○ si le paramètre de qualité des données du deuxième créneau est supérieur à un niveau de qualité prédéterminé, utilisation de la longueur de N - Δ bits du deuxième créneau pour remplir le paquet de transfert,
○ si le paramètre de qualité des données du deuxième créneau est inférieur à un niveau de qualité prédéterminé, utilisation du paquet de masquage pour remplir le paquet de transfert.

10. Procédé selon l'une quelconque des revendications 4 à 6, dans lequel l'algorithme de transfert comprend, dans le cas où N + Δ > N, les étapes suivantes :
- détermination d'un paramètre de qualité de données du premier créneau,
- si le paramètre de qualité des données du premier créneau est inférieur à un niveau de qualité prédéterminé,
○ remplissage d'une première partie du paquet de transfert avec la première longueur de Δ bits du paquet de masquage,
○ détermination d'un paramètre de qualité de données du deuxième créneau, et
• si le paramètre de qualité des données du deuxième créneau est supérieur à un niveau de qualité prédéterminé, remplissage d'une deuxième partie du paquet de transfert avec une longueur de N bits du deuxième créneau,
• si le paramètre de qualité des données du deuxième créneau est inférieur à un niveau de qualité prédéterminé, remplissage d'une deuxième partie du paquet de transfert avec la longueur de N bits du paquet de masquage,
- si le paramètre de qualité de données du premier créneau est supérieur à un niveau de qualité prédéterminé,
○ remplissage d'une première partie du paquet de transfert avec la longueur de N bits du premier créneau,
○ détermination d'un paramètre de qualité de données du deuxième créneau, et
• si le paramètre de qualité des données du deuxième créneau est supérieur à un niveau de qualité prédéterminé, remplissage d'une deuxième partie du paquet de transfert avec la longueur de Δ bits du deuxième créneau,
• si le paramètre de qualité des données du deuxième créneau est inférieur à un niveau de qualité prédéterminé, remplissage d'une deuxième partie du paquet de transfert avec la longueur de Δ bits du paquet de masquage.

11. Procédé selon l'une quelconque des revendications 4 à 6 et 10, dans lequel l'algorithme de transfert comprend, dans le cas où N + Δ < N, les étapes suivantes :
- détermination d'un paramètre de qualité de données du premier créneau,
- si le paramètre de qualité des données du premier créneau est inférieur à un niveau de qualité prédéterminé,
○ remplissage d'une première partie du paquet de transfert avec la longueur de min(|Δ|, N - |Δ|) bits du paquet de masquage,
○ si |Δ| > N - |Δ|, détermination d'un paramètre de qualité des données du deuxième créneau, et
• si le paramètre de qualité des données du deuxième créneau est supérieur à un niveau de qualité prédéterminé, remplissage d'une deuxième partie du paquet de transfert avec la longueur de N - 2*Δ bits du deuxième créneau,
• si le paramètre de qualité des données du deuxième créneau est inférieur à un niveau de qualité prédéterminé, remplissage d'une deuxième partie du paquet de transfert avec la longueur de N - 2*Δ bits du paquet de masquage,
- si le paramètre de qualité des données du premier créneau est supérieur à un niveau de qualité prédéterminé,
○ remplissage d'une première partie du paquet de transfert avec la longueur de N - Δ bits du premier créneau.

12. Agencement informatique comprenant un processeur (101), qui est conçu pour communiquer avec une unité E/S (125), l'agencement informatique étant conçu pour fonctionner dans un système TDMA et pour exécuter un transfert, dans un système TDMA, entre un premier créneau temporel et un deuxième créneau temporel, comprenant les étapes suivantes :
a) réception de parties de données comprenant N bits dans un premier créneau temporel (1), au moyen de l'unité E/S (125), et utilisation de ces parties de données pour générer une première partie d'un flot de sortie (7) ;
b) exécution d'un transfert du premier créneau temporel vers le deuxième créneau temporel ;
c) réception de parties de données comprenant N bits dans un deuxième créneau temporel (3), au moyen de l'unité E/S (125), et utilisation de ces parties de données pour générer une deuxième partie du flot de sortie (7),
dans lequel l'action b) comprend la génération d'un paquet de transfert (30, 30') de telle sorte qu'il fasse partie du flot de sortie (7), entre les première et deuxième parties du flot de sortie (7), le paquet de transfert comprenant N + Δ bits, où Δ prend en compte une différence de synchronisation entre le premier créneau temporel (1) et le deuxième créneau temporel (3).

13. Produit de programme informatique comprenant des données et des instructions qui peuvent être chargées par un système informatique, permettant audit système informatique d'exécuter l'un quelconque des procédés selon les revendications 1 à 11.

14. Support lisible par un ordinateur équipé d'un produit de programme informatique selon la revendication 13.

15. Agencement informatique conçu pour exécuter l'un quelconque des procédés selon les revendications 1 à 11.
